# EUROPÄISCHE PATENTSCHRIFT

(11) **EP 3 525 903 B1**
(45) Veröffentlichungstag und Bekanntmachung des Hinweises auf die Patenterteilung: **19.08.2020**
(21) Anmeldenummer: 17787368.4
(22) Anmeldetag: 10.10.2017
(51) Int. Cl.: B01D 19/00, F04B 19/00, F04B 43/04

(54) **ENTGASUNGSVORRICHTUNG**
DEGASSING DEVICE
DISPOSITIF DE DÉGAZAGE

(30) Priorität: 14.10.2016 DE 102016220107
(43) Veröffentlichungstag der Anmeldung: 21.08.2019
(73) Patentinhaber: Fraunhofer-Gesellschaft zur Förderung der angewandten Forschung e.V., 80686 München (DE)
(72) Erfinder: RICHTER, Martin, 81677 München (DE); WILLE, Axel, 82110 Germering (DE); STROHMAIR, Simone, 82110 Germering (DE); WALD, Christian, 80689 München (DE)
(74) Vertreter: Stöckeler, Ferdinand
(86) Internationale Anmeldenummer: PCT/EP2017/075811
(87) Internationale Veröffentlichungsnummer: WO 2018/069318

(56) Entgegenhaltungen:
- DE-A1- 19 941 271
- DE-A1-102009 012 347
- DE-C1- 4 446 270
- US-A1- 2006 008 913

## Beschreibung

Die Erfindung betrifft eine Vorrichtung zum Entgasen von Flüssigkeiten mit den Merkmalen von Anspruch 1.

Gasblasen sind eines der Hauptprobleme in mikrofluidischen Systemen. Blasen können sich auf verschiedene Weise ungünstig auswirken:
- durch die elastischen Eigenschaften von kompressiblen Gasen können Drucksignale gedämpft werden, wodurch z.B. dieser Druck nicht mehr an einem Mikroventil ankommt und dieses nicht mehr öffnet.
- Die freien Oberflächen der Gasblase führen zu Kapillarkräften, die eine signifikante Störgröße sind, z.B. bei Mikroventilen, kleinen Spalten oder Kapillaren. Dabei sind die Kapillarkräfte umso größer, je kleiner die Geometrien sind (Laplace Gleichung)
- Diese Kapillarkräfte führen auch dazu, dass sich Gasblasen an Ecken und Toträumen akkumulieren und durch Spülen nicht herausgebracht werden
- Die Anwesenheit von Gasblasen kann eine Messung eines Flüssigkeitssensors komplett verfälschen, wenn sich an der Sensormembran Gas und keine Flüssigkeit befindet.

Das heißt, in mikrofluidischen Systemen führen solche Gasblasen oft zum Ausfall von Komponenten oder zu verfälschten Messungen.

Es gibt zwar Methoden, Mikrofluidsysteme blasenfrei zu befüllen. Es ist jedoch sehr schwer, diesen blasenfreien Zustand im Betrieb dauerhaft zu erhalten:
- Blasen können durch Transportprozesse in das System eingebracht werden
- Blasen können entstehen, indem durch Wände (z.B. durch Kunststoffschläuche, v.a. Silikon) Luft in das System diffundiert, und Wasserdampf aus dem System diffundiert.
- In fluidischen Systemen befinden sich, z.B. wenn die Flüssigkeit in Kontakt mit der Atmosphärenluft ist, meist Gasblasen und Gas gelöst in der Flüssigkeit. Gase gelöst im flüssigen Medium können bei Druckänderungen (Druckerniedrigungen) oder bei Temperaturänderungen (Temperaturerhöhungen) übersättigt werden, dann zu Blasen ausgasen und dieselben Probleme bewirken.

Demnach wäre es wünschenswert, Technologien bereitzustellen, die Blasen abscheiden und der gesättigten Flüssigkeit gelöste Gasmoleküle entziehen.

Im Stand der Technik sind hierfür sowohl passive als auch aktive Entgaser bekannt.

Passive Entgaser zeichnen sich durch eine nicht benetzende Membran aus (hydrophob im Falle von Wasser), die Gasblasen von der Flüssigkeit trennen. Wenn nun in der Flüssigkeit ein Druck herrscht, der größer ist als der Atmosphärendruck, wird eine ankommende Gasblase durch die nicht benetzende Membran aus dem Flüssigkeitsstrom entfernt. Dieser erhöhte Druck kann z.B. durch die Schwerkraft bewirkt werden, in dem der Entgaser vertikal in einer Leitung angeordnet wird. Passive Entgaser sind daher nur "Blasenabscheider" und entziehen der Flüssigkeit nur Gasblasen und nicht gelöstes Gas.

Aktive Entgaser bestehen ebenfalls aus einer nicht benetzenden Membran zum Abscheiden von Gas, die in Kontakt zur Flüssigkeit steht. Die Druckdifferenz als antreibende Wirkung wird aber mit einem von außen angelegten Unterdruck aufgebaut. Dies kann in Form eines Vakuumanschlusses oder einer Vakuumpumpe geschehen.

Um gasspezifisch die Entgasungsrate zu erhöhen, kann ein "strip"-Gas, beispielsweise Stickstoff, eingesetzt werden. Wird damit die Gaszusammensetzung im Entgaser zugunsten des "strip" Gases verändert, sinkt gleichzeitig der Partialdruck der anderen Gase, die effektiv eine höhere Druckdifferenz sehen.

Aktive Entgaser werden beispielsweise in der US 2005/0092182 A1 beschrieben. Die US 2007/0012190 A1 beschreibt eine Kombination aus einem aktiven Entgaser mit einem passiven Entgaser. In beiden Druckschriften weisen die darin beschriebenen aktiven Entgaser eine Druckkammer mit einem Anschluss auf, mit dem sie an eine externe Vakuumpumpe anschließbar sind. Um die Druckkammer zu evakuieren muss also stets eine Vakuumpumpe mitgeführt werden, bzw. an dem jeweiligen Einsatzort vorhanden sein, damit die aktiven Entgaser überhaupt funktionstüchtig sind.

Zur Lösung dieses Problems wurden als Alternative zu den Unterdruck erzeugenden Vakuumpumpen bereits aktive Entgaser vorgeschlagen, die Ultraschall zum Entgasen nutzen. Dabei wird eine Ultraschallwelle in der zu entgasenden Flüssigkeit erzeugt, die lokal zu Druckschwankungen führt, die wiederum in den Unterdruckbereichen zu Kavitation führen. Das gelöste Gas sammelt sich dort in Gasbläschen und kann entfernt werden. Die Entgasung mittels Ultraschall ist jedoch sehr aufwendig und die Bedienung ist verhältnismäßig komplex. Außerdem sind Ultraschallquellen deutlich teurer als herkömmliche Vakuumpumpen.

Weitere Vorrichtungen sind beispielsweise aus der DE 44 46 270 C1 bekannt. Darin ist eine Basisstruktur für einen Flüssigkeitschromatographie-Entgaser beschrieben. In der US 2006 / 008 913 A1 ist ein Drucksensor beschrieben, der dazu dient, den anliegenden Fluiddruck unterhalb eines Grenzdrucks zu halten, sodass das Fluid nicht ungewollt durch eine Membran hindurchgedrückt wird. Die DE 10 2009 012 347 A1 beschreibt einen blasentoleranten Partikelfilter.

Es ist deshalb eine Aufgabe der vorliegenden Erfindung, Vorrichtungen bereitzustellen, die geeignet sind, um Flüssigkeiten zu entgasen, ohne jedoch die oben genannten Nachteile aufzuweisen.

Diese Aufgabe wird erfindungsgemäß durch eine Vorrichtung mit den Merkmalen von Anspruch 1 gelöst.

Die erfindungsgemäße Vorrichtung weist unter anderem eine Druckkammer und eine mit der Druckkammer in Fluidverbindung stehende Mikropumpe auf. Unter einer Mikropumpe ist eine Pumpe zu verstehen, die in Mikrosystemtechnik hergestellt ist. Die Abmessungen einer Mikropumpe liegen für gewöhnlich im Bereich von einigen Hundert Mikrometern. Die Mikropumpe kann als ein aus Silizium hergestellter Mikropumpenchip ausgebildet sein. Die Chipgröße kann beispielsweise 7x7 mm² oder weniger betragen. Die Mikropumpe kann eine Mikromembranpumpe sein, deren Membran mittels eines Piezoaktors betätigbar ist. Die Membran kann ebenfalls aus Silizium hergestellt sein. Es wäre aber ebenso denkbar, eine Metallfolie als Pumpenmembran zu verwenden. Die Mikropumpe kann eine Förderleistung pro Pumpenhub, d.h. ein Hubvolumen, von 50 µl oder weniger aufweisen. Die Mikropumpe ist somit in den Bereich der Mikrofluidik einzuordnen. Es ist bekannt, dass sich die Eigenschaften von Fluiden in der Mikrofluidik wesentlich von den Eigenschaften makroskopischer Fluide unterscheiden können, weil in dieser Größenordnung der Mikrofluidik Effekte dominieren können, welche in der klassischen Strömungslehre oft vernachlässigt werden können. Erfindungsgemäß ist die Druckkammer zweigeteilt, wobei die Druckkammer einen gasführenden Bereich und einen flüssigkeitsführenden Bereich aufweist. In dem gasführenden Bereich ist ein Gas oder ein Gasgemisch, z.B. Umgebungsluft, vorhanden, das sich in dem gasführenden Bereich weitestgehend frei bewegen kann. In dem flüssigkeitsführenden Bereich ist eine Flüssigkeit vorhanden die mittels einer Förderpumpe durch den flüssigkeitsführenden Bereich gefördert werden kann, d.h. die Flüssigkeit strömt, bedingt durch den mittels der Förderpumpe erzeugten Fluiddruck, durch den flüssigkeitsführenden Bereich mit einer in der Regel definierten Strömungsgeschwindigkeit hindurch. Der Fluiddruck kann sich hierbei nur geringfügig von dem atmosphärischen Druck unterscheiden. In der Flüssigkeit sind ein oder mehrere Gase (z.B. innerhalb eines Gasgemischs) gelöst, die mittels der erfindungsgemäßen Vorrichtung zumindest teilweise entfernt werden können. Hierfür ist die Mikropumpe ausgebildet, um innerhalb des gasführenden Bereichs einen pneumatischen Druck aufzubauen, der geringer ist als der Fluiddruck der durch den flüssigkeitsführenden Bereich strömenden Flüssigkeit. Das heißt, die Mikropumpe erzeugt in der Druckkammer eine Druckdifferenz zwischen dem Luftdruck innerhalb des gasführenden Innenraums der Druckkammer und dem Fluiddruck innerhalb des flüssigkeitsführenden Bereichs der Druckkammer. Vorzugsweise erzeugt die Mikropumpe einen Unterdruck in dem gasführenden Bereich relativ zu dem flüssigkeitsführenden Bereich, d.h. der pneumatische Druck innerhalb des gasführenden Bereichs ist geringer als der Fluiddruck innerhalb des flüssigkeitsführenden Bereichs. In dem Fall, dass der Fluiddruck etwa dem Umgebungsluftdruck der die Druckkammer umgebenden Umgebung entspricht, kann auch gesagt werden, dass die Mikropumpe einen Unterdruck in dem gasführenden Bereich relativ zu dem Atmosphärendruck erzeugt. Ein in der Flüssigkeit gelöstes Gas weist in der Umgebung einen bestimmten Partialdruck auf. Wenn die Flüssigkeit nun in den flüssigkeitsführenden Bereich der Druckkammer geleitet wird, so wird die Flüssigkeit von dem in dem gasführenden Bereich der Druckkammer vorherrschenden Unterdruck umgeben. Bedingt durch diesen vorherrschenden Unterdruck sinkt der Partialdruck der in der Flüssigkeit gelösten Gasphase. Infolgedessen sinkt die Löslichkeit bzw. die Gasaufnahmekapazität der Flüssigkeit und die Gasmoleküle beginnen aus der Flüssigkeit auszugasen bzw. sich aus der Flüssigkeit herauszulösen. Erfindungsgemäß weist die Vorrichtung ferner ein gasdurchlässiges und flüssigkeitsundurchlässiges Abscheideelement auf, das zumindest abschnittsweise den gasführenden Bereich und den flüssigkeitsführenden Bereich voneinander trennt. Das aus der Flüssigkeit ausgasende Gas kann durch dieses Abscheideelement nach außen, d.h. in Richtung des gasführenden Abschnitts der Drucckammer diffundieren, während die Flüssigkeit selbst nicht durch dieses Abscheideelement diffundieren kann. Das Abscheideelement bildet also eine Flüssigkeitssperre. Der durch das Abscheideelement hindurch diffundierte Anteil des Gases ist somit von der Flüssigkeit getrennt. Die Flüssigkeit wurde also mittels der erfindungsgemäßen Vorrichtung, zumindest teilweise, entgast. Erfindungsgemäß ist die Mikropumpe an der Druckkammer angeordnet. Wie eingangs erwähnt, kennt der Stand der Technik lediglich Druckkammern, an denen Anschlüsse zum Anschließen einer externen Vakuumpumpe vorgesehen sind. Diese Vakuumpumpen sind jedoch relativ groß und unhandlich und somit nur bedingt transportabel. Die vorliegende Erfindung hingegen sieht vor, dass die Mikropumpe direkt an der Druckkammer angeordnet bzw. in die Druckkammer integriert ist. Somit entsteht eine transportable kombinierte Einheit aus Druckkammer und Mikropumpe. Da die Abmessungen der Mikropumpe sehr klein im Vergleich zu konventionellen Mikropumpen sind, kann die gesamte Einheit aus Druckkammer und Mikropumpe ebenfalls sehr kompakt ausfallen. Dies erhöht die Mobilität der erfindungsgemäßen Vorrichtung deutlich. Außerdem weist die erfindungsgemäße Vorrichtung lediglich einen elektrischen Anschluss für die Mikropumpe auf, was wesentlich einfacher zu handhaben ist als dicke Druckluftleitungen, die zu einer externen Vakuumpumpe führen. Noch einfacher wird es, wenn die Mikropumpe batteriebetrieben ist. Dann kann sogar ein Stromversorgungsanschluss entfallen und die Mobilität der erfindungsgemäßen Entgasungsvorrichtung wird noch weiter erhöht. Die erfindungsgemäße Entgasungsvorrichtung kann somit einfach als eine kombinierte Einheit (Druckkammer plus Pumpe) überall eingesetzt werden, während hingegen bekannte Entgasungsvorrichtungen immer darauf angewiesen sind, dass vor Ort eine externe Vakuumpumpe zum Evakuieren der Druckkammer vorhanden ist.

Es ist denkbar, dass die Mikropumpe an der Druckkammer mittels einer Schraub- und/oder einer Klemmbefestigung befestigt ist. Die Mikropumpe kann also beispielsweise direkt an die Druckkammer angeschraubt werden, wobei natürlich entsprechende Dichtmittel an den Schraubenlöchern vorzusehen sind. Ebenso denkbar wäre es, dass z.B. ein Deckel über der Mikropumpe montiert ist, der an der Druckkammer befestigt ist und somit die Mikropumpe definiert auf die Druckkammer drückt. Dieser Deckel kann beispielsweise mittels Schrauben, oder mittels einem Scharnier oder einem Schnappverschluss an der Druckkammer befestigbar sein. Ein Vorteil einer Schraub- bzw. Klemmverbindung besteht darin, dass die Mikropumpen, z.B. bei einem Defekt, schnell und einfach austauschbar sind.

Alternativ oder zusätzlich kann die Mikropumpe auch mittels eines Fügemittels, insbesondere mittels Klebstoff oder Lot, an der Druckkammer befestigt sein. Die Mikropumpe kann also beispielsweise durch Kleben, Löten oder Bonden (z.B. anodischer Bond, eutektischer Bond) an der Druckkammer befestigt werden. Die Dichtwirkung einer Klebung ist größer als bei einer Klemmung. Zudem ist die Klebung günstiger und es muss kein separater Deckel bereitgestellt werden.

Es ist vorstellbar, dass die Mikropumpe ausgebildet ist, um in dem gasführenden Bereich der Druckkammer einen Unterdruck von -30 kPa bis zu -55 kPa gegenüber dem Atmosphärendruck zu erzeugen. Ein derartiger Unterdruck ist für Mikropumpen außergewöhnlich hoch und nur durch präzise Einstellung ausgewählter Prozessparameter erreichbar. Es hat sich jedoch gezeigt, dass ein Unterdruck in den angegeben Grenzen besonders gut geeignet ist, um bei Mikrofluidik-Anwendungen eine hohe Entgasungsrate bei verhältnismäßig hoher Strömungsgeschwindigkeit des durch die Druckkammer durchfließenden Fluids zu realisieren. In Zahlen ausgedrückt wurde trotz einer hohen Strömungsgeschwindigkeit von bis zu 100 µl/min eine Entgasungsrate von bis zu 54% (absolut) erreicht, bei einer durchschnittlichen Verweildauer der Flüssigkeit innerhalb des flüssigkeitsführenden Bereichs der Drucckammer von etwa 48 Sekunden.

Gemäß einem Ausführungsbeispiel der Erfindung ist das Abscheideelement eine zwischen dem gasführenden Bereich und dem flüssigkeitsführenden Bereich angeordnete gasdurchlässige und flüssigkeitsundurchlässige Membran. Das heißt, der gasführende Bereich und der flüssigkeitsführende Bereich der Druckkammer sind durch eine solche Membran separiert. Vorzugsweise ist die Membran nur in eine Richtung durchlässig für Gase. Dementsprechend ist die Membran derart in der Druckkammer angeordnet, dass deren Permeatseite dem gasführenden Bereich der Druckkammer zugewandt ist, und die Retentatseite der Membran ist dem flüssigkeitsführenden Bereich der Druckkammer zugewandt. Somit wird die Flüssigkeit von der Membran innerhalb des flüssigkeitsführenden Bereichs der Drucckammer zurückgehalten, während das aus der Flüssigkeit ausgasende Gas durch die Membran hindurchtreten kann, sodass das ausgasende Gas von dem flüssigkeitsführenden Bereich in den gasführenden Bereich der Druckkammer übertreten kann.

Alternativ oder zusätzlich kann der flüssigkeitsführende Bereich eine innerhalb der Drucckammer verlaufende Schlauchleitung sein. Die Schlauchleitung hat den Vorteil, dass sie flexibel ist und somit in nahezu beliebiger Form innerhalb der Druckkammer verlegbar ist. Vorteilhafter Weise kann eine Schlauchleitung beispielsweise schrauben- bzw. helixförmig in der Druckkammer verlegt werden, sodass die Verweildauer der durch diese Schlauchleitung strömenden Flüssigkeit innerhalb der Druckkammer erhöht werden kann.

Dabei kann die Schlauchleitung zumindest abschnittsweise ein Material aufweisen, das das gasdurchlässige und flüssigkeitsundurchlässige Abscheideelement bildet. Das heißt, die Schlauchleitung kann entweder vollständig oder teilweise aus einem gasdurchlässigen und flüssigkeitsundurchlässigen Material hergestellt sein oder ein solches aufweisen. Vorteilhafter Weise weist die Schlauchleitung zumindest an deren innerhalb der Druckkammer verlaufenden Abschnitten ein solches gasdurchlässiges und flüssigkeitsundurchlässiges Material auf. Das in der durch die Schlauchleitung strömenden Flüssigkeit gelöste Gas kann somit, zumindest durch diese bestimmten Abschnitte der Schlauchleitung hindurch, in den gasführenden Bereich der Druckkammer diffundieren. Je mehr gasdurchlässige und flüssigkeitsundurchlässige Abschnitte die Schlauchleitung aufweist, desto größer ist die Diffusionsrate. Vorteilhafter Weise besteht daher die gesamte Schlauchleitung aus einem solchen gasdurchlässigen und flüssigkeitsundurchlässigen Material.

Gemäß Ausführungsbeispielen der Erfindung weist die Vorrichtung eine mit dem gasführenden Bereich fluidisch gekoppelte Drucksensorik und eine mit der Drucksensorik verbundene Steuerung auf, wobei die Steuerung ausgebildet ist, um die Mikropumpe in Abhängigkeit von einem Signal der Drucksensorik derart anzusteuern, dass die Mikropumpe eingeschaltet wird, wenn der Druck innerhalb des gasführenden Bereichs der Druckkammer über einen Schwellwert ansteigt. Wenn Gas aus dem flüssigkeitsführenden Bereich in den gasführenden Bereich der Druckkammer diffundiert, dann nimmt der Unterdruck in dem gasführenden Bereich der Druckkammer ab bzw. der Absolutdruck innnerhalb der Druckkammer steigt an. Die Entgasung innerhalb der Druckkammer ist aber nur solange effektiv bis der in der Drucckammer vorherrschende Unterdruck soweit ausgeglichen ist, bis keine Differenz mehr zu dem Partialdruck des zu entgasenden Gases besteht. Somit ist zwischen dem Partialdruck des zu entgasenden Gases und dem in der Druckkammer herrschenden Drucks kein Druckgradient mehr vorhanden. Das Gas diffundiert dann nicht mehr in den gasführenden Bereich der Druckkammer. Um diesen Umstand frühzeitig zu erkennen, kann die erfindungsgemäße Vorrichtung eine entsprechende Drucksensorik aufweisen. Die Drucksensorik erkennt einen bestimmten Schwellwert des in der Druckkammer vorherrschenden Drucks. Wenn der Unterdruck unter diesen Schwellwert abgefallen ist, z.B. durch Undichtigkeiten oder durch die zuvor beschriebene Gasdiffusion, dann meldet die Drucksensorik diesen Druckabfall an eine Steuerung. Die Steuerung wiederum steuert die Mikropumpe an, um den Unterdruck in dem gasführenden Bereich der Druckkammer wieder zu erhöhen.

Die Vorrichtung weist ferner eine Förderpumpe auf, mittels derer Flüssigkeit durch den flüssigkeitsführenden Bereich gefördert werden kann. Alternativ oder zusätzlich kann auch die Mikropumpe ausgebildet sein, um Flüssigkeit durch den flüssigkeitsführenden Bereich zu fördern. Die Förderpumpe dient also dazu, die zu entgasende Flüssigkeit durch die Drucckammer zu fördern, während die Mikropumpe einerseits dazu dient, um einen Unterdruck in dem gasführenden Bereich der Druckkammer herzustellen. Um auf eine Förderpumpe zu verzichten, und die erfindungsgemäße Vorrichtung somit noch mobiler zu gestalten, kann die Mikropumpe aber auch die Förderung der zu entgasenden Flüssigkeit übernehmen. Ebenso denkbar wäre es, dass die Förderpumpe ebenfalls eine weitere bzw. zusätzliche Mikropumpe ist.

Außerdem weist die Vorrichtung eine mit dem gasführenden Bereich fluidisch gekoppelte Drucksensorik und eine mit der Drucksensorik und der flüssigkeitsfördernden Pumpe verbundene Steuerung auf, wobei die Steuerung ausgebildet ist, um die flüssigkeitsfördernde Pumpe in Abhängigkeit von einem Signal der Drucksensorik derart anzusteuern, dass die Förderrate der flüssigkeitsfördernden Pumpe soweit erhöht werden kann, bis der Druck innerhalb des gasführenden Bereichs einen Schwellwert erreicht, und derart, dass bei einem einen Schwellwert überschreitenden Druck innerhalb des gasführenden Bereichs die Förderrate der flüssigkeitsfördernden Pumpe gesenkt wird. Mittels dieser Steuerung kann die Entgasungsrate optimiert werden. Wie eingangs bereits erwähnt, hängt die Entgasungsrate unter anderem von der Verweildauer der zu entgasenden Flüssigkeit in der Druckkammer ab. Diese Verweildauer kann entweder durch eine Erhöhung der Oberfläche des flüssigkeitsführenden Bereichs (z.B. schrauben- bzw. helixförmige Schlauchwicklungen) oder durch die Strömungsgeschwindigkeit der zu entgasenden Flüssigkeit beeinflusst werden. Ebenso wurde bereits erläutert, dass eine Diffusion von Gas von dem flüssigkeitsführenden Bereich in den gasführenden Bereich eine Verringerung des Unterdrucks (bzw. Erhöhung des Absolutdrucks) in dem gasführenden Bereich der Druckkammer zur Folge hat. Solange die Drucksensorik feststellt, dass der Unterdruck in dem gasführenden Bereich der Druckkammer nicht unter einen vordefinierten Schwellwert abfällt (d.h. Absolutdruck steigt nicht über den vordefinierten Schwellwert), kann die Förderleistung der Förderpumpe weiter erhöht werden. Sofern die Drucksensorik jedoch feststellt, dass der Unterdruck in dem gasführenden Bereich der Druckkammer unter den Schwellwert gefallen ist (d.h. Absolutdruck steigt an, Unterdruck baut sich ab), deutet dies darauf hin, dass mehr Gas in den gasführenden Bereich diffundiert als die Mikropumpe aus der Druckkammer evakuieren kann. Deshalb steuert die Steuerung die Förderpumpe derart an, dass sie ihre Förderleistung verringert. Durch eine verringerte Förderleistung strömt nämlich die Flüssigkeit langsamer durch die Druckkammer und die Mikropumpe hat mehr Zeit, das ausdiffundierte Gas aus der Druckammer zu evakuieren. Dadurch kann der Unterdruck in der Druckkammer ausreichend hoch gehalten werden.

Ausführungsbeispiele der Erfindung sehen vor, dass die Vorrichtung eine in der Druckkammer angeordnete Temperaturregelvorrichtung aufweist, die ausgebildet ist, um den gasführenden Bereich zu kühlen und/oder den flüssigkeitsführenden Bereich zu heizen. Die Temperaturregelvorrichtung kann beispielsweise eine Heizung sein, die den flüssigkeitsführenden Bereich erhitzt, oder eine Kühlung, die den gasführenden Bereich kühlt. Durch beide Maßnahmen kann die Entgasungsrate erhöht werden.

Des Weiteren ist es vorstellbar, dass die Vorrichtung ein mit dem gasführenden Bereich fluidisch gekoppeltes Ventil aufweist, das mit einer ein Strippungs-Gas führenden Leitung verbunden ist, um ein Strippungs-Gas in den gasführenden Bereich der Druckkammer einzuleiten. Ein Strippungs-Gas ist ein Gas, das geeignet ist, um eine Strippung der zu entgasenden Flüssigkeit zu ermöglichen. Eine Strippung ist ein physikalisches Trennverfahren, bei dem das zu entfernende Gas aus der zu entgasenden Flüssigkeit durch Desorptionsvorgänge unter Ausnutzung des Henry'schen Gesetzes in die Gasphase überführt werden. Dazu wird die zu entgasende Flüssigkeit im Gegenstromprinzip mit dem Strippungs-Gas in Kontakt gebracht.

Außerdem ist es denkbar, dass innerhalb der Druckkammer oder in Flussrichtung der zu fördernden Flüssigkeit vor der Druckkammer ein Gasblasendetektionsmittel vorgesehen ist, das ausgebildet ist, um eine Gasblase in der zu fördernden Flüssigkeit zu detektieren, und wobei die Vorrichtung ferner eine Steuerung aufweist, die ausgebildet ist, um die Mikropumpe in Abhängigkeit von einer erfolgten Gasblasendetektion einzuschalten. Die Blasenerkennung kann beispielsweise kapazitiv oder optisch erfolgen. Somit kann die Mikropumpe gezielt dann eingeschaltet werden, wenn eine Gasblase detektiert wird, um ebendiese Gasblase innerhalb der Druckkammer aus der Flüssigkeit zu entfernen. Dadurch, dass die Mikropumpe zugeschaltet wird, kann vermieden werden, dass der Unterdruck innerhalb der Druckkammer aufgrund der Diffusion der Gasblase zu stark abfällt.

Weiterhin kann eine Steuerung, die mittels einer Blasenerkennung, die auch die Größe einer Blase erkennt, die Förderrate der Förderpumpe anpassen oder verringern, so dass auch bei sehr großen Blasen die Mikropumpe die Luftblase aus dem Fluidstrom entfernen kann, ohne dass der Unterdruck zu stark abfällt oder die Blase die Unterdruckkammer passieren kann. Diese Blasengrößenerkennung kann beispielsweise kapazitiv erfolgen, indem die Fluidleitung durch mehrere segmentierte kapazitive Elektroden ausgestattet wird.

Wenn eine große Blase in den Entgaser eintritt, kann dies alternativ auch der Drucksensor erkennen, indem es einen starken Abfall des Unterdrucks gibt. In diesem Fall kann eine Steuerung ebenfalls die Förderrate der Förderpumpe anpassen oder verringern oder kurzzeitig anhalten, bis die Mikropumpe die Blase abgesaugt hat, und der Unterdruck wieder hergestellt ist. Danach kann die Förderpumpe wieder auf ihre normale Förderrate eingestellt werden.

Durch diese Steuerung kann vermieden werden, dass große Luftblasen das Entgasungsmodul passieren können.

Außerdem ist es denkbar, dass der flüssigkeitsführende Bereich der Druckkammer einen Einlass und einen Auslass aufweist, mittels deren die Vorrichtung in eine flüssigkeitsführende Leitung eines flüssigkeitsführenden Systems zwischenschaltbar ist. Solche flüssigkeitsführenden Systeme können beispielsweise sein:
- Alle mikrofluidischen Systeme, die Flüssigkeiten transportieren, in denen Gase gelöst oder in Form von Blasen vorliegen.
- Fluidische Messtechnik
- Lab-on-Chip Systeme
- Industrieanlagen, die gasfreie Flüssigkeiten benötigen und deren Abmessungen Schläuche im Millimeterbereich und Förderraten in wenigen ml/min vorweisen.
- Biotechnologie und Medizintechnik Anwendungen, die Flüssigkeiten im Mikroliter Maßstab handhaben.

Ausführungsbeispiele der Erfindung sind in der Zeichnung dargestellt und werden nachstehend erläutert. Es zeigen:
- Fig. 1: eine schematische Schnittansicht eines Ausführungsbeispiels einer erfindungsgemäßen Vorrichtung,
- Fig. 2: eine schematische Ansicht einer erfindungsgemäßen Vorrichtung, die in einem flüssigkeitsführenden System zwischengeschaltet ist,
- Fig. 3: eine schematische Ansicht eines weiteren Ausführungsbeispiels einer erfindungsgemäßen Vorrichtung, und
- Fig. 4: eine schematische Schnittansicht eines weiteren Ausführungsbeispiels einer erfindungsgemäßen Vorrichtung, die in einem flüssigkeitsführenden System zwischengeschaltet ist.

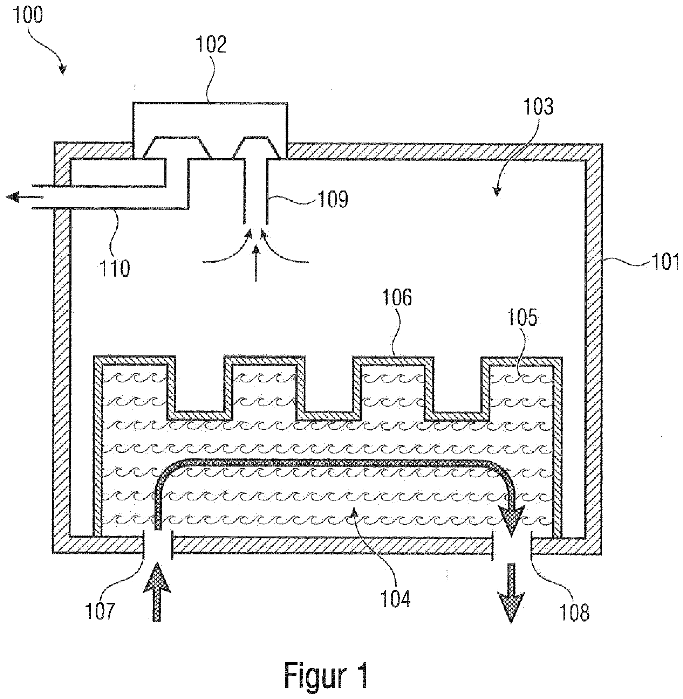

Figur 1 zeigt eine erfindungsgemäße Vorrichtung 100. Die Vorrichtung 100 weist eine Drucckammer 101 und eine mit der Druckkammer 101 in Fluidverbindung stehende Mikropumpe 102 auf.

Die Druckkammer 101 weist einen gasführenden Bereich 103 und einen flüssigkeitsführenden Bereich 104 auf.

Die Mikropumpe 102 ist ausgebildet, um innerhalb des gasführenden Bereichs 103 einen pneumatischen Druck zu erzeugen, der geringer ist als der Fluiddruck einer durch den flüssigkeitsführenden Bereich 104 strömenden Flüssigkeit 105. In der Flüssigkeit 105 kann ein Gas und/oder ein Gasgemisch gelöst sein.

Innerhalb der Druckkammer 101 ist ein gasdurchlässiges und flüssigkeitsundurchlässiges Abscheideelement 106 angeordnet, das zumindest abschnittsweise den gasführenden Bereich 103 und den flüssigkeitsführenden Bereich 104 voneinander trennt.

Die Mikropumpe 102 ist an der Druckkammer 101 angeordnet.

Die in Figur 1 abgebildete Ausführungsform der erfindungsgemäßen Vorrichtung 100 ist geeignet, um ein in einer Flüssigkeit 105 gelöstes Gas und/oder ein Gasgemisch und/oder Teile eines Gasgemisches aus dieser Flüssigkeit 105 zumindest teilweise zu entfernen. Dieser Vorgang wird auch als Entgasen der Flüssigkeit 105 bezeichnet. Dementsprechend können derartige Vorrichtungen 100 auch als Entgaser bezeichnet werden.

Die erfindungsgemäße Vorrichtung 100 kann in ein flüssigkeitsführendes System, dessen Flüssigkeit 105 entgast werden soll, zwischengeschaltet werden. Hierfür kann die Drucckammer 101 einen Flüssigkeitseinlass 107 und einen Flüssigkeitsauslass 108 aufweisen. Die zu entgasende Flüssigkeit 105 strömt dann in der mit Pfeilen angedeuteten Richtung vom Einlass 107 zu dem Auslass 108.

Der Bereich innerhalb Druckkammer 101 durch den die zu entgasende Flüssigkeit 105 strömt, wird auch als flüssigkeitsführender Bereich 104 der Druckkammer 101 bezeichnet. Ein Abscheideelement 106 trennt den flüssigkeitsführenden Bereich 104 der Druckkammer 101 von dem verbleibenden Innenraum der Druckkammer 101. Das Abscheideelement 106 ist hier als eine gasdurchlässige und flüssigkeitsundurchlässige Membran 106 ausgebildet. In dem in Figur 1 abgebildeten Ausführungsbeispiel ist die Membran 106 gefaltet, um eine große Oberfläche zu erzielen. Es ist ebenso denkbar, dass die Membran 106 nicht gefaltet ist.

In dem eben erwähnten verbleibenden Bereich im Innenraum der Druckkammer 101 befindet sich Gas, insbesondere Umgebungsluft. Daher wird dieser Bereich der Druckkammer 101 auch als gasführender Bereich 103 bezeichnet.

Außenseitig an der Druckkammer 101 ist eine Mikropumpe 102 angeordnet. Die Mikropumpe 102 kann auch innenseitig an der Druckkammer 101 angeordnet sein. Die Mikropumpe 102 weist einen Gaseinlass 109 und einen Gasauslass 110 auf. Der Gaseinlass 109 ist fluidisch mit dem gasführenden Bereich 103 der Druckkammer 101 verbunden. Der Gasauslass 110 ist fluidisch mit der die Druckkammer 101 umgebenden Umgebung verbunden.

Die Mikropumpe 102 ist ausgebildet, um das in dem gasführenden Bereich 103 befindliche Gas durch den Gaseinlass 109 anzusaugen und durch den Gasauslass 110 der Umgebung zuzuführen. Da die Druckkammer weitestgehend 101 druckdicht ausgestaltet ist, bildet sich dadurch in der Druckkammer 101 ein Unterdruck im Vergleich zum Umgebungsdruck.

Die zu entgasende Flüssigkeit 105 wird etwa unter Umgebungsdruck (oder z.B. mit einem Fluiddruck, der etwa 5%-10% über dem atmosphärischen Druck liegt) in die Druckkammer 101 eingeleitet. In Abhängigkeit von dem Umgebungsdruck (bzw. dem Fluiddruck) sowie von der Umgebungstemperatur ist in der zu entgasenden Flüssigkeit 105 eine bestimmte Menge an Gas bzw. Gasen gelöst. In der Umgebung weist das in der Flüssigkeit 105 gelöste Gas bzw. Gasgemisch einen bestimmten Partialdruck auf.

Gemäß dem Henry-Gesetz ist der Partialdruck eines Gases über einer Flüssigkeit direkt proportional zur Konzentration des Gases in der Flüssigkeit. Das heißt, je höher der Umgebungsdruck ist, umso höher ist der Partialdruck des Gases und damit bei gegebener Löslichkeit die Konzentration des Gases, d.h. umso mehr Gas kann von der Flüssigkeit aufgenommen werden. Andererseits steigt mit abnehmendem Partialdruck des Gases bzw. Gasgemisches die Flüchtigkeit des Gases in der Flüssigkeit (bzw. sinkt die Konzentration des in der Flüssigkeit gelösten Gases).

Diesen Effekt macht sich die erfindungsgemäße Vorrichtung 100 zu Nutze. Durch das Abpumpen des in dem gasführenden Bereich 103 befindlichen Gases mittels der Mikropumpe 102, bildet sich in dem gasführenden Bereich 103 ein Druck aus, der geringer ist als der Partialdruck des in der zu entgasenden Flüssigkeit 105 gelösten zu entfernenden Gases (bzw. Gasbestandteils). In dem gasführenden Bereich 103 der Druckkammer 101 bildet sich also ein Unterdruck im Vergleich zu dem Partialdruck des in der Flüssigkeit 105 gelösten Gases aus.

Zwischen dem gasführenden Bereich 103 und dem flüssigkeitsführenden Bereich 104 bildet sich ein Druckgradient aus, der von dem Bereich des höheren Drucks (flüssigkeitsführender Bereich 104) zu dem Bereich niedrigeren Drucks (gasführender Bereich 103) gerichtet ist.

Da die unterschiedlichen Gasdrücke bestrebt sind, sich auszugleichen, ist das in der zu entgasenden Flüssigkeit 105 gelöste Gas bestrebt in den gasführenden Bereich 103 der Drucckammer 101 hinüber zu strömen.

Wie eingangs erwähnt, ist das Abscheideelement 106 gasdurchlässig. Daher kann das in der zu entgasenden Flüssigkeit 105 gelöste Gas durch dieses Abscheideelement 106 von dem flüssigkeitsführenden Bereich 104 hinüber in den gasführenden Bereich 103 diffundieren.

Da das Abscheideelement 106 aber auch flüssigkeitsundurchlässig ist, bleibt die zu entgasende Flüssigkeit 105 selbst in dem flüssigkeitsführenden Bereich 104 der Druckkammer 101 zurück. Im Resultat ist in der aus der Druckkammer 101 durch den Flüssigkeitsauslass 108 hinausströmenden Flüssigkeit 105 wesentlich weniger Gas gelöst als in der in die Druckkammer 101 durch den Flüssigkeitseinlass 107 hineinströmenden Flüssigkeit 105.

Die Mikropumpe 102 ist ausgebildet, um in dem gasführenden Bereich 103 einen Unterdruck von -30 kPa bis -55 kPa gegenüber dem Atmosphärendruck zu erzeugen. Dieser Unterdruck ist besonders gut geeignet, um der zu entgasenden Flüssigkeit 105 darin gelöste Umgebungsluft zu entziehen.

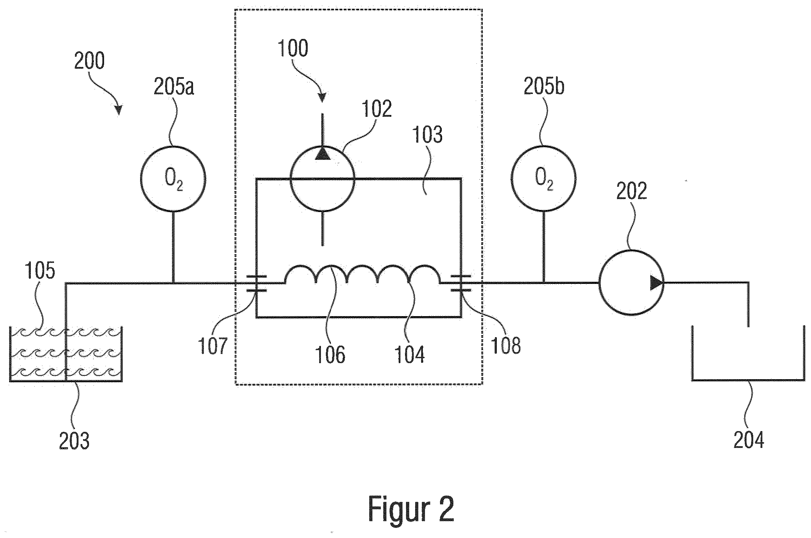

Das physikalische Prinzip, auf dem die Entgasung der Flüssigkeit mittels der erfindungsgemäßen Vorrichtung 100 beruht, soll schematisch mit Bezug auf Figur 2 näher erläutert werden.

Figur 2 zeigt ein flüssigkeitsführendes System 200, in das eine erfindungsgemäße Vorrichtung 100 zum Entgasen einer Flüssigkeit 105 zwischengeschaltet ist.

Die erfindungsgemäße Vorrichtung 100 weist eine Druckkammer 101 auf. An der Drucckammer 101 ist eine Mikropumpe 102 angeordnet. Die Mikropumpe 102 ist fluidisch mit einem gasführenden Bereich 103 der Druckkammer 101 verbunden.

Die Druckkammer 101 weist außerdem einen flüssigkeitsführenden Bereich 104 auf. In diesem Fall weist die Druckkammer 101 einen Schlauch auf, der den flüssigkeitsführenden Bereich 104 bildet.

Der Schlauch weist außerdem, zumindest abschnittsweise, ein gasdurchlässiges und flüssigkeitsundurchlässiges Material auf. Vorzugsweise ist die Wand des Schlauchs aus einem solchen Material hergestellt, sodass die Schlauchwand ein gasdurchlässiges und flüssigkeitsundurchlässiges Abscheideelement 106 bildet. Es ist aber auch denkbar, dass in der Schlauchwand eine nicht benetzende gasdurchlässige und flüssigkeitsundurchlässige Membran eingearbeitet ist.

Das flüssigkeitsführende System 200 weist außerdem eine Förderpumpe 202 auf, die eine zu entgasende Flüssigkeit 105 von einem Reservoir 203 durch die erfindungsgemäße Vorrichtung 100 hindurch zu einem Behälter 204 fördert. In Strömungsrichtung vor und nach der erfindungsgemäßen Vorrichtung 100 ist jeweils ein Sauerstoffmessgerät 205a, 205b in der Fluidleitung angeordnet.

Im Reservoir 203 befindet sich Wasser 105, in dem charakteristisch für den herrschenden Atmosphärendruck eine gegebene Menge Gas (z.B. Luft mit 21% Sauerstoff) gelöst ist. Die Förderpumpe 202 pumpt die Flüssigkeit 105 aus dem Reservoir 203 durch die Vakuumkammer 101, in der das Wasser 105 entgast wird.

Da Sensoren zur Messung von im Wasser gelöstem Stickstoff nicht verfügbar sind, wird hier die Menge der im Wasser gelösten Luft durch eine Messung der Sauerstoffkonzentration abgeleitet. Die beiden O₂-Sensoren 205a, 205b messen den Sauerstoffgehalt des Wassers 105, mit dem auf die Menge der gelösten Luft rückgeschlossen wird.

Der Entgasungseffekt beruht darauf, dass die Flüssigkeit 105 in dem flüssigkeitsführenden Bereich 104 (z.B. poröser Schlauch) durch eine Kammer 101 geleitet wird, die unter Unterdruck steht (kurz Vakuumkammer oder Druckkammer genannt). Das gelöste Gas passt sich an die anderen physikalischen Verhältnisse (Unterdruck) an und diffundiert durch das Abscheideelement (z.B. die Schlauchwände) 106 in die Kammer 101. Die Mikropumpe 102 erzeugt den hierfür nötigen Unterdruck und hält ihn während des Betriebs aufrecht.

Vorteilhafter Weise ist die Förderpumpe 202 in Strömungsrichtung hinter der erfindungsgemäßen Vorrichtung (Entgaser) 100 positioniert. Befindet sich die Förderpumpe 202 vor der Vakuumkammer 101 wird ein Überdruck im Flüssigkeitskreislauf erzeugt, so dass die erfindungsgemäße Vorrichtung (Entgaser) 100 nicht optimal arbeiten kann und es nach der Vakuumkammer 101 zu Luftbläschen kommen kann.

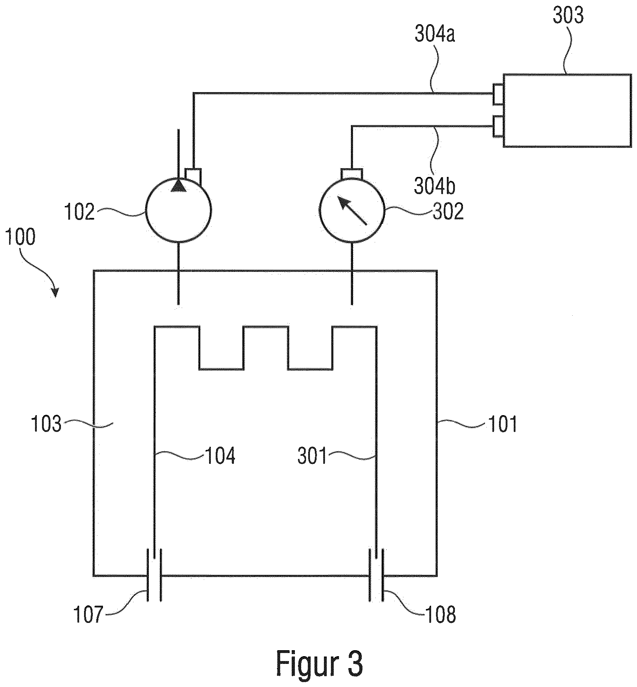

Figur 3 zeigt eine weitere Ausführungsform der erfindungsgemäßen Vorrichtung 100. In diesem Ausführungsbeispiel weist die Druckkammer 101 einen Flüssigkeitseinlass 107 und einen Flüssigkeitsauslass 108 auf. Zwischen dem Einlass 107 und dem Auslass 108 ist eine Schlauchleitung 301 angeordnet. Die Schlauchleitung 301 bildet den flüssigkeitsführenden Bereich 104 innerhalb der Druckkammer 101.

Die Wände des Schlauchs 301 können zumindest abschnittsweise ein gasdurchlässiges und flüssigkeitsundurchlässiges Material aufweisen. Beispielsweise kann es sich hier um einen porösen Schlauch handeln. Somit bilden die Schlauchwände an zumindest diesen gasdurchlässigen und flüssigkeitsundurchlässigen Abschnitten ein Abscheideelement 106. Wenn also der Schlauch 301 über seine komplette, sich innerhalb der Druckkammer 101 erstreckenden, Länge eine gasdurchlässige und flüssigkeitsundurchlässige Eigenschaft aufweist, dann bildet der Schlauch 301 den flüssigkeitsführenden Bereich 104 innerhalb der Druckkammer 101 und gleichzeitig bilden die Schlauchwände über die gesamte Länge des Schlauchs 301 das Abscheideelement 106, durch die das in der zu entgasenden Flüssigkeit 105 gelöste Gas in den gasführenden Bereich 103 der Druckkammer 101 diffundieren kann, um die Flüssigkeit 105 somit zu entgasen.

Um eine hohe Entgasungsrate zu erzielen ist es vorteilhaft, möglichst viel von dem Schlauch 301 innerhalb der Druckkammer 101 zu verlegen. Daher ist der Schlauch 301, wie in Figur 3 schematisch angedeutet, schrauben- bzw. helixförmig aufgewickelt.

Im Vergleich zu den zuvor beschriebenen Ausführungsbeispielen weist die in Figur 3 abgebildete Ausführungsform zusätzlich eine optionale Drucksensorik 302 auf. Die Drucksensorik 302 ist fluidisch mit der Druckkammer 101 gekoppelt, d.h. es ist ein Gasaustausch zwischen der Drucksensorik 302 und der Druckkammer 101 möglich, um z.B. den Luftdruck innerhalb der Druckkammer 101 zu messen. Genauer gesagt ist die Drucksensorik 302 hierfür mit dem gasführenden Abschnitt 103 der Druckkammer 101 fluidisch gekoppelt.

Die Vorrichtung 101 weist außerdem eine Steuerung 303 auf. Die Steuerung 303 ist über entsprechende Signalleitungen 304a, 304b mit der Drucksensorik 302 und mit der Mikropumpe 102 verbunden. Die Steuerung 303 ist ausgebildet, um die Mikropumpe 102 in Abhängigkeit von einem Signal der Drucksensorik 302 derart anzusteuern, dass die Mikropumpe 102 eingeschaltet wird, wenn der Druck innerhalb des gasführenden Bereichs 103 der Druckkammer 101 über einen Schwellwert ansteigt.

Beispielsweise ist die Entgasungsrate zwischen einem in der Druckkammer 101 vorherrschenden Unterdruck von -30 kPa bis -55 kPa (gegenüber Atmosphärendruck) sehr gut. Demnach könnte die Steuerung 303 beispielsweise den größeren Wert, d.h. -30 kPa, als Schwellwert abspeichern.

Wenn die Steuerung 303 nun mittels der Drucksensorik 302 im laufenden Betrieb detektiert, dass der Unterdruckabfall in der Druckkammer 101 zu groß geworden ist, d.h. dass der Druck innerhalb der Druckkammer 101 über den Schwellwert von -30 kPa und darüber hinaus ansteigt, dann steuert die Steuerung 303 die Mikropumpe 102 an, sodass die Mikropumpe 102 wieder zu pumpen beginnt und wieder Gas aus dem gasführenden Bereich 103 abführt. Dadurch steigt der Unterdruck in der Druckkammer 101 wieder an, d.h. der Druck innerhalb der Druckkammer 101 sinkt wieder auf einen Wert unterhalb des Schwellwerts, d.h. kleiner als -30 kPa.

Die Mikropumpe 102 kann somit getaktet betrieben bzw. bedarfsgerecht angesteuert werden, um z.B. Energie zu sparen.

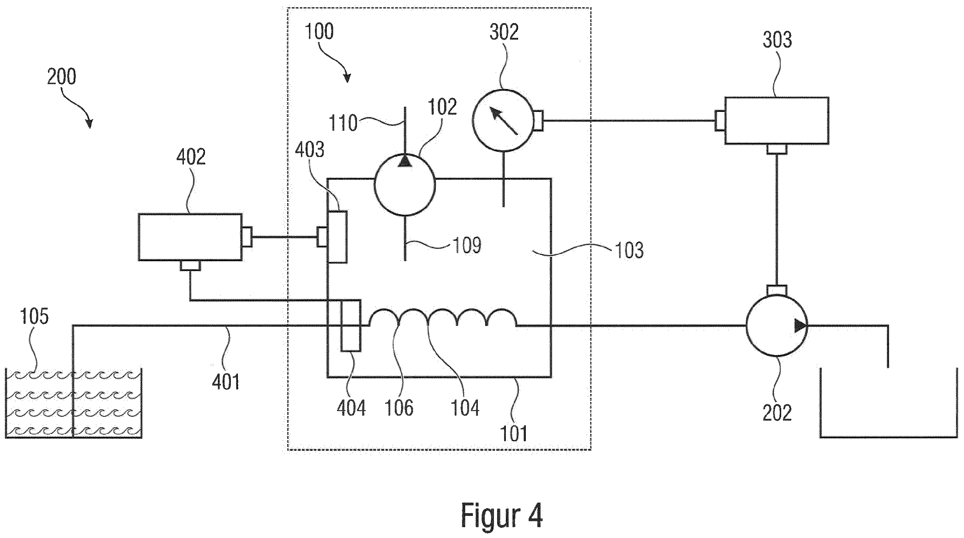

Ein weiteres Ausführungsbeispiel ist in Figur 4 abgebildet. Dieses Ausführungsbeispiel ähnelt im Wesentlichen dem zuvor mit Bezug auf Figur 2 beschriebenen Ausführungsbeispiel. Zusätzlich sind hier jedoch noch eine zur Erfindung gehörige Steuerung 303 und eine zur Erfindung gehörige Drucksensorik 302 abgebildet.

Die Vorrichtung 100 ist hier also in einem flüssigkeitsführenden System 200 zwischengeschaltet. Die zu entgasende Flüssigkeit 105 wird mittels einer Förderpumpe 202 durch die Vorrichtung 100 hindurch gefördert. Die Förderpumpe 202 kann selbst als eine Mikropumpe ausgebildet sein.

Es wäre aber ebenso denkbar, dass die mit dem gasführenden Bereich 103 der Druckkammer 101 fluidisch verbundene Mikropumpe 102 die zu entgasende Flüssigkeit 105 fördert. In diesem Fall würde die Mikropumpe 102, neben den abgebildeten Gasführungen, d.h. Gaseinlass 109 und Gasauslass 110, zusätzliche (nicht abgebildete) Flüssigkeitsführungen, d.h. einen Flüssigkeitseinlass und einen Flüssigkeitsauslass, aufweisen, die seriell in der flüssigkeitsführenden Leitung 401 zwischengeschaltet wären. So könnte die Mikropumpe 102 die zu entgasende Flüssigkeit 105 durch den flüssigkeitsführenden Bereich 104 fördern.

Je nachdem welche Pumpe die Flüssigkeit 105 fördert, d.h. entweder die Mikropumpe 102 oder die separate Förderpumpe 202, ist die jeweilige flüssigkeitsfördernde Pumpe 102, 202 mit der Steuerung 303 verbunden. Außerdem ist die Drucksensorik 302 mit der Steuerung 303 verbunden.

Die Steuerung 303 ist ausgebildet, um die flüssigkeitsfördernde Pumpe 102, 202 in Abhängigkeit von einem Signal der Drucksensorik 302 derart anzusteuern, dass die Förderrate der flüssigkeitsfördernden Pumpe 102, 202 soweit erhöht wird, bis soviel Gas aus der Flüssigkeit 105 ausgast, dass der Druck innerhalb des gasführenden Bereichs 103 einen Schwellwert erreicht.

Alternativ oder zusätzlich ist die Steuerung 303 ausgebildet, um die flüssigkeitsfördernde Pumpe 102, 202 in Abhängigkeit von einem Signal der Drucksensorik 302 derart anzusteuern, dass bei einem einen Schwellwert überschreitenden Druck innerhalb des gasführenden Bereichs 103 die Förderrate der flüssigkeitsfördernden Pumpe 102, 202 gesenkt wird, um somit die Ausgasungsrate der Flüssigkeit 105 zu verringern.

Wie zuvor bereits erwähnt wurde, führt die Entgasung der Flüssigkeit 105 dazu, dass das von dem flüssigkeitsführenden Bereich 104 in den gasführenden Bereich 103 diffundierende Gas eine Erhöhung des Drucks innerhalb des gasführenden Bereichs 103 bewirkt, d.h. der Unterdruck verringert sich.

Solange die Drucksensorik 302 feststellt, dass der Unterdruck in dem gasführenden Bereich 103 der Druckkammer 101 nicht unter einen vordefinierten Schwellwert, z.B. -30 kPa, abfällt (d.h. Absolutdruck steigt nicht über den vordefinierten Schwellwert), kann die Förderleistung der flüssigkeitsfördernden Pumpe 102, 202 weiter erhöht werden.

Sofern die Drucksensorik 302 jedoch feststellt, dass der Unterdruck in dem gasführenden Bereich 103 der Druckkammer 101 unter den Schwellwert, z.B. -30 kPa, gefallen ist (d.h. Absolutdruck steigt an, Unterdruck baut sich ab), deutet dies darauf hin, dass mehr Gas in den gasführenden Bereich 103 diffundiert als die Mikropumpe 102 aus der Druckkammer 101 evakuieren kann. Deshalb steuert die Steuerung 303 die Förderpumpe 102, 202 derart an, dass sie ihre Förderleistung verringert. Durch eine verringerte Förderleistung strömt nämlich die Flüssigkeit 105 langsamer durch die Druckkammer 101 und die Mikropumpe 102 hat mehr Zeit, das ausdiffundierte Gas aus der Druckkammer 101 zu evakuieren. Dadurch kann der Unterdruck in der Druckkammer 101 ausreichend hoch gehalten werden.

Um die Entgasungsrate weiter zu erhöhen, kann die Vorrichtung 100 eine Temperaturregelvorrichtung 402 aufweisen. Die Temperaturregelvorrichtung 402 ist ausgebildet, um mittels eines Kühlelements 403 die Temperatur innerhalb des gasführenden Bereichs 103 der Druckkammer 101 zu senken, und/oder um mittels eines Heizelements 404 die Temperatur der zu entgasenden Flüssigkeit 105 in dem flüssigkeitsführenden Bereich 104 zu erhöhen.

Generell kann die Effektivität der erfindungsgemäßen Vorrichtung 100 mittels mehrerer Parameter beeinflusst werden. Dazu gehören die maximale Menge gelösten Gases in Abhängigkeit von Temperatur und Druck, Diffusionszeiten von Gasen in Flüssigkeiten und durch poröse Medien (wie z.B. einem Schlauch 301 mit gasdurchlässigem und flüssigkeitsundurchlässigem Material). Zusammen mit technischen Parametern der erfindungsgemäßen Vorrichtung 100 und Spezifikationen bestimmter Zielanwendung ergeben sich Anforderungen an die Dimensionen des flüssigkeitsführenden Bereichs (z.B. Schlauch) 104 und der Druckkammer 101.

### Technische Parameter:

- Förderrate Förderpumpe 102, 202
- Vorhandene Durchmesser des porösen Schlauchs 104, 301
- Möglicher Unterdruck durch Mikropumpe 102 bis zu -55 kPa
- Druckabfall aufgrund von Schlauchlänge und Innendurchmesser
- Verweilzeit in Vakuumkammer 101 (Kombination aus Förderrate und Schlauchlänge)

### Spezifikation Anwendungs-Beispiel:

- Max. Flussrate, bei der die Entgasung noch funktionieren soll: z.B. 100 µl/min. Diese Förderrate ist vorteilhaft, weil sowohl bei portablen Analysesystemen (z.B. Lab on Chip) als auch bei portablen Medikamentendosiersystemen (v.a. Patch Pumpen) die maximalen Förderraten unter diesem Wert liegen
- Mit der erfindungsgemäßen Vorrichtung 100 soll die Flüssigkeit 105 vom potentiell gesättigten Zustand (100% gelöste Luft) in einen Zustand mit niedrigerer Sättigung überführt werden, damit in portablen Mikrodosiersystemen die Flüssigkeit durch Schwankungen des Drucks oder der Temperatur nicht mehr ausgasen kann, da Blasen sich negativ auf Dosiergenauigkeit oder die Sensorfunktion auswirken können. Daher ist eine Entgasung von mind. 30% mittels der erfindungsgemäßen Vorrichtung 100 erreichbar, d.h. die Flüssigkeit 105 hat nach dem Durchlaufen der erfindungsgemäßen Vorrichtung 100 eine Sättigung von max. 70%.

Daraus ergeben sich folgende Anforderungen an Schlauch 301 und Druckkammer 101:
• Schlauch Innendurchmesser 0,61 mm
• Schlauchlänge siehe Tabelle 1

**Tabelle1**

| **Flussrate [µl/min]** | **Schlauchlänge [m]** | **Schlauchvolumen [mm³]** | **Druckabfall [kPa]** |
|---|---|---|---|
| 50 | 0,14 | 58 | 0,03 |
| 100 | 0,27 | 116 | 0,13 |
| 150 | 0,41 | 174 | 0,30 |
| 200 | 0,54 | 232 | 0,54 |

Die Verweilzeit in der Vakuumkammer 101 beträgt für jede dieser Schlauchlängen etwa 48 s, was für viele Anwendungen eine passende Zeit darstellen könnte bei maximal möglicher Entgasung (55%). Bei höheren Förderraten sinkt die Entgasungsrate.

Eine weitere Randbedingung ist, dass die Vakuumkammer 101 groß genug ausgelegt wird, so dass bei hoher Entgasungsrate oder auch, wenn eine Gasblase abgesaugt wird, der Druck in der Kammer 101 nicht zu stark ansteigt. Da der poröse Schlauch 301 zu einer (schrauben- bzw. helixförmigen) Spirale gewickelt werden kann, um nicht zu knicken, kann die Vakuumkammer 101 beispielsweise zylinderförmig ausgelegt werden. In Abhängigkeit von der Schlauchlänge ergeben sich dabei automatisch Kammervolumina, die ein Vielfaches vom Schlauchvolumen betragen.

Die Erfindung soll nachfolgend noch einmal in anderen Worten zusammengefasst werden.

Die vorliegende Erfindung beschreibt eine Vorrichtung 100, mit der Flüssigkeiten 105 Blasen entzogen werden können, und auch das gelöste Gas teilweise entzogen werden kann, so dass sichergestellt wird, dass am Auslass 108 der Vorrichtung 100 keine Gasblase ankommt, und am Auslass 108 auch keine mit Gas gesättigte Flüssigkeit ankommt, und so kein Gas ausgasen kann.

Dadurch können auch Systeme realisiert werden, in denen Gasblasen unvorteilhaft sind, ohne eine Vakuumpumpe oder einen Vakuumanschluss zu benötigen.

Diese Vorrichtung 100 kann sehr klein realisiert werden, dadurch kann auch in portablen Anwendungen Flüssigkeit ohne Blasen bereitgestellt werden, z.B. portable Analysensysteme, Lab-On Chip Systeme, Sensorsysteme, Handheld Geräte, etc...

Technische Anwendungsgebiete können z.B. sein:
- Alle mikrofluidischen Systeme, die Flüssigkeiten transportieren, in denen Gase gelöst oder in Form von Blasen vorliegen.
- Fluidische Messtechnik
- Lab-on-Chip Systeme
- Industrieanlagen, die gasfreie Flüssigkeiten benötigen und deren Abmessungen Schläuche im Millimeterbereich und Förderraten in wenigen ml/min vorweisen.
- Biotechnologie und Medizintechnik Anwendungen, die Flüssigkeiten im Mikroliter Maßstab handhaben.

Die erfindungsgemäße Vorrichtung 100 beinhaltet als aktives Element eine Mikropumpe 102, die einen geringen Leistungsbedarf hat, je nach Ausführungsform zwischen 5 mW und einigen hundert mW, so dass mit einer Batterie die Entgasung des portablen Systems über einen langen Zeitraum möglich ist.

Die Erfindung integriert die Mikropumpe 102, die den notwendigen Unterdruck für einen aktiven Entgaser aufbaut, in die Entgaserkomponente. Damit ist als einzige Versorgung nur elektrischer Strom notwendig. Ein großer Vorteil ist also Mobilität. Ein weiterer Vorteil ist der geringere Platzverbrauch. Herkömmliche Entgaser benötigen eine gesonderte Pumpe. Ein weiterer Nutzen ist die Einsparung von Energie. Externe Pumpen weisen in der Regel, bedingt durch Leckraten an Anschlüssen und Verbindungsschläuchen, Verluste auf, die mit zusätzlichem Energieaufwand verbunden sind.

Die Entgasungsrate hängt von dem aufgebauten Unterdruck ab. Im Bereich mikrofluidischer Systeme ist die Mikropumpe 102 der Anmelderin die einzig bekannte Mikropumpe, die ein ausreichend hohes Kompressionsverhältnis aufweist, um so einen Unterdruck aufzubauen.

Dabei ist es in der Praxis oft gar nicht nötig, die Flüssigkeit 105 komplett zu entgasen. Sondern es sollte nur sichergestellt sein, die Flüssigkeit 105 so weit zu entgasen, dass im Betrieb bei den üblichen Temperatur- und Druckschwankungen keine Blasen entstehen.

Es ist beispielsweise in Figur 1 zu erkennen, dass die gasdurchlässige und flüssigkeitsundurchlässige (z.B. nicht benetzende) Membran 106 in einer Unterdruckkammer 101 platziert wird, in deren Hülle eine Mikropumpe 102 integriert wird. Der notwendige Unterdruck wird damit direkt in der Entgaserkomponente erzeugt. Ein Vakuumanschluss entfällt.

Der Entgaser 100 wird an einer geeigneten Stelle in ein fluidisches System 200 zwischengeschaltet (siehe auch Figur 2). Die Förderung des Systems 200 treibt die zu entgasende Flüssigkeit 105 durch den Einlass 107 in die Fluidführung 104 mit der nicht benetzenden Membran (oder Schlauch) 106. Die Mikropumpe 102 baut einen Unterdruck in der Unterdrucckammer 101 auf. Durch die Druckdifferenz in der Fluidführung 104 relativ zur umgebenden Kammer 101 wird Gas durch die nicht benetzende Membran 106 in die Kammer 101 gesogen. Dadurch verringert sich der Unterduck in der Kammer 101, was durch die Pumpe 102 wieder ausgeglichen wird.

Ein optionaler Drucksensor 302 (siehe Figuren 3 und 4) ist für den Normalbetrieb nicht nötig. Für einen Energiesparbetrieb kann der Drucksensor 302 zur Regelung der Mikropumpe 102 genutzt werden. Die Mikropumpe 102 wird dann nur eingeschaltet, wenn der Druck über einen Schwellwert ansteigt (bzw. der Unterdruck unter einen Schwellwert abfällt).

Physikalisch steckt hinter diesem Entgaser 100 ein Diffusionsprozess, der durch die Druckdifferenz zwischen der Unterdruckkammer 101 und dem Umgebungsdruck außerhalb der Kammer 101 getrieben wird. Die Menge der in der Flüssigkeit 105 gelösten Gase hängt vom Umgebungsdruck ab und in der Zusammensetzung von den Partialdrücken. In der Unterdruckkammer 101 wirkt ein niedrigerer Druck auf die Flüssigkeit 105 und die gelösten Gase, so dass durch Diffusion diese Differenz ausgeglichen wird. Die Druckdifferenz limitiert damit sowohl die maximal erreichbare Entgasung der Flüssigkeit 105 als auch die Entgasungsrate pro Zeit.

Gleichzeitig beeinflussen die Geometrie und die Durchlässigkeit des flüssigkeitsführenden Bereichs 104 mit nicht benetzender Membran 106 die Diffusion. Aus diesen Einflüssen ergibt sich eine Entgasungsrate pro Zeit, so dass je nach Anwendung die Fluidgeschwindigkeit und die Fluidführungslänge aufeinander abgestimmt werden müssen.

Bei der Auslegung der Mikropumpe 102 ist zu beachten ob eine mit Gas gesättigte Flüssigkeit 105 entgast werden soll oder auch größere Gasblasen abgesaugt werden müssen. Bei der Konstruktion der Unterdruckkammer 101 spielt deren Größe bzw. Volumen die Hauptrolle bei der Pufferwirkung der Kammer 101. Übersteigt die Entgasungsrate die Förderleistung der Mikropumpe 102, steigt der Druck in der Unterdruckkammer 101 an, was zu einer niedrigeren Entgasungsrate führt. Der Druckanstieg hängt von der Größe der Unterdruckkammer 101 ab. Diese Faktoren sind beim Zusammenspiel aller Komponenten zu beachten.

Nachfolgend sollen einige denkbare Ausführungsbeispiele stichpunktartig genannt werden.
- Vorrichtung 100, bestehend aus Fluidleitung 104, gaspermeables Element 106 und Druckkammer 101, zur Reduktion gelöster Gase in durchströmter, flüssigkeitsbefüllter Leitung 104 durch unterdruckerzeugende Mikropumpe 102.
- Vorrichtung 100, bestehend aus mindestens einem Fluideinlass 107 und Fluidauslass 108, einem Fluidbereich 104 zwischen Fluideinlass 107 und Fluidauslass 108, und einer Druckkammer 101, wobei die Druckkammer 101 zumindest teilweise von dem Fluidbereich 104 durch ein gaspermeables und flüssigkeitsundurchlässiges Abscheideelement 106 getrennt ist, wobei der pneumatische Druck in der Druckkammer 101 durch mindestens eine Mikropumpe 102 unter den Fluiddruck gesenkt werden kann.
- Portable Vorrichtung mit Netzanschluss oder Batteriebetrieb
- Gelöste Gase können auch als zweite Phase (Blase) vorliegen
- Mikropumpe 102 kann in Unterdruckkammer 101 integriert oder separat angeschlossen sein
- Gaspermeables Element 106 kann als Schlauch, Membran, poröse Platte oder gefaltet vorliegen
- Gaspermeables Material kann hydrophob, oleophob etc. sein
- Zusätzliches Ventil in Unterdruckkammer 101 oder in Mikropumpen-Leitung, um Leckraten zu vermeiden oder eine Regelung um eine Belüftung zu ergänzen oder ein "strip"-Gas einzuleiten oder eine sonstige definierte Gaszusammensetzung einzuleiten
- Zusätzlicher Drucksensor 302 in Unterdruckkammer 101 oder Mikropumpen-Leitung. Damit verbunden sind verschiedene Möglichkeiten intelligenter Regelung zum
   ∘ Energie sparen, Mikropumpe 102 wird nur betrieben wenn der Unterdruck ansteigt
   ∘ Regelung der Förderpumpe 102, 202, Flussoptimierung
      ▪ Unterdruck bleibt gleich → Förderrate kann erhöht werden
      ▪ Unterdruck steigt an trotz max. Mikropumpenleistung → Förderrate senken
- Kontinuierlicher oder bedarfsabhängiger Betrieb der Mikropumpe 102
- Kontinuierliche oder schubweise Durchströmung der Fluidleitung 104
- Fluidförderung kann ebenfalls durch Mikropumpe 102 erfolgen
- Zusätzlich Temperaturregelung in der Unterdruckkammer 101 durch Heiz- oder Kühlelemente 404, 403. Eine Kühlung der Unterdruckkammer 101 bzw. Heizen des zu entgasenden Fluides 105 würde die Entgasungsrate erhöhen.
- Eine oder mehrere Fluidleitungen in der Unterdruckkammer 101
- Blasenerkennung (z.B. kapazitiv, optische) vor oder in Unterdruckkammer 101 und Pumpenregelung abhängig von Blasendetektion, um die Mikropumpe 102 anzuschalten bzw. die Förderrate zu senken, um die Gasblase abzusaugen.
- Detektion der Entgasungsleistung durch Anstieg des Drucks in der Unterdruckkammer 101 oder durch benötigte Pumpleistung zum Aufrechterhalten eines Druckniveaus, eventuell mit Regelung, dass nur vollständig entgastes Fluid 105 weitertransportiert wird (= weitere Miniaturisierung)
- Detektion von Fluideigenschaften durch Ausgasungseigenschaften

Ein Merkmal der erfindungsgemäßen Vorrichtung 100 besteht darin, dass die Mikropumpe 102 an der Druckkammer 101 angeordnet ist. Generell kann die Mikropumpe (z.B. Silizium-Mikropumpenchip) 102 auf mehrere Arten in die erfindungsgemäße Vorrichtung (Entgaser) 100 integriert werden:

### 1) Klemmen

- auf der Unterseite des Pumpenchips sind die Ein- und Auslässe 109, 110 der Mikropumpe 102. Diese können mit dem Entgasergehäuse 101 fluidisch dicht verbunden werden, indem der Chip über eines oder mehrere Dichtelemente geklemmt wird. Das Dichtelement kann z.B.
   ∘ ein weicher Kunststoff sein (z.B. Silikon), der entsprechende Öffnungen bei den Ein- und Auslässen 109, 110 hat. Dieser Kunststoff kann z.B. durch Heißprägen oder Spritzgießen geformt werden.
   ∘ zwei O-Ringe sein, auf die der Pumpenchip 102 geklemmt wird (wenn der Pumpenchip so gestaltet ist, dass die O-Ringe Platz finden)
- Das Klemmelement ist z.B. ein Deckel der über dem Pumpenchip 102 montiert ist, und der den Chip 102 definiert auf die Dichtelemente drückt. Dieser Deckel kann durch mehrere Schrauben am Entgaser 101 befestigt sein, oder durch ein Scharnier und einem Schnappverschluss
- Es muss bei dem Dichtelement darauf geachtet werden, dass die Dichtung gegenüber dem erreichbaren Unterdruck gasdicht ist. Dazu müssen Designregeln bei den Klemmstrukturen beachtet werden.
- Beispielsweise gibt es bei einem O-Ring Regeln, wie die Aufnahmen gestaltet sein müssen, um bei Unterdruck eine genügende Dichtheit zu gewährleisten. Hier können bei Bedarf sowohl im Entgasergehäuse 101 als auch im Pumpenchip 102 entsprechende Strukturen realisiert werden, in denen die Silikondichtungen bzw. die O-Ringe eingelegt werden.
- Eine 100-prozentige Dichtheit ist nicht erforderlich. Die vorhandenen Leckraten dürfen allerdings nicht die Pumpkapazitäten übersteigen, um den Unterdruck zu erzeugen. Bzw. sollte die Mikropumpe 102, wenn kein sehr großes Energiebudget bei einer batteriebetriebenen Anwendung zur Verfügung steht, nicht andauernd in Betrieb sein, um die Leckraten auszugleichen und den Unterdruck aufrecht zu erhalten.
- Allerdings haben passive Rückschlagventile in einer Mikropumpe 102 selbst Leckraten, so dass Umgebungsluft durch die ausgeschaltete Mikropumpe 102 in die Unterdruckkammer 101 zurückfließt. Ggf. muss hier, wenn die Leckraten zu groß sind:
   o Ein passives Rückschlagventil konstruktiv so gestaltet werden, dass die Leckrate minimal ist, und in Schließrichtung möglichst kleine Restspalte sind.
   o Für die Dichtung ein "Saftey Valve in Rückwärtsrichtung" verwendet werden (siehe z.B. WO 2014/094879 A1). Bei diesen Weichdichtungen gibt es keine Restspalte.

### 2) Kleben bzw. Fügen mit Fügeschicht

- Der Pumpenchip 102 kann direkt mit dem Entgasergehäuse 101 fest verbunden werden durch
   ∘ Kleben
   ∘ Löten
   ∘ Bonden (z.B. anodischer Bond, Eutektischer Bond)

Die beim Klemmen aufgeführten Argumente bezüglich der Dichtheit und den Leckraten gelten analog beim Fügen.

Vorteil: Klebung ist meist dichter als Klemmen, außerdem günstiger, und es wird kein Klemmdeckel benötigt

Eine im Produktsinne vorteilhafte Lösung ist das Kleben einer Mikropumpe 102 mit einem Klappenventil mit kleiner Restleckrate, wobei die Klappenventile der aktuellen Fraunhofer Mikropumpen bereits ausreichend gut sind für Entgaser mit etwa -50 kPa Unterdruck und Batteriebetrieb.

Mit der erfindungsgemäßen Vorrichtung 100 wird ein Entgaser bereitgestellt. Entgaser 100 dienen dazu gelöste Gase aus Flüssigkeiten 105 herauszuziehen. Bisher war dafür ein Vakuumanschluss oder eine große Vakuumpumpe nötig. Die erfindungsgemäße Vorrichtung 100 wird der notwendige Unterdruck mit einer integrierten Mikropumpe 102 aufgebaut. Das gewährt eine erhöhte Mobilität und reduziert die nötige Versorgung auf einen Stromanschluss.

Die erfindungsgemäße Vorrichtung 100 weist eine Vakuumkammer 101 zum Entgasen auf, in deren Deckel eine Mikropumpe 102, optional ein Drucksensor 302 und fluidische 104 und elektrische Anschlüsse integrierbar sind. Ein poröser, gasdurchlässiger Schlauch 301 kann im Inneren der Vakuumkammer 101 verlegt sein. Mittels der erfindungsgemäßen Vorrichtung 100 können Unterdrücke bis -55 kPa relativ zum Atmosphärendruck (ca. halber Standard Luftdruck) aufgebaut werden, mit denen Wasser um gut 50% entgast werden kann. Dies entspricht ungefähr 85% der theoretisch möglichen Entgasung bei diesem Unterdruck.

In der vorliegenden Offenbarung werden folgende Ausdrücke verwendet:
**Druckeinheiten**
   1 Atmosphäre = 1000 mbar = 1000 hPa = 100 kPa
**Entgasung**
   Gase lösen sich in Flüssigkeit. Das bedeutet, dass Gas nicht als Blase vorliegt sondern einzelne Gasmoleküle zwischen den Flüssigkeitsmolekülen gemischt sind. Werden Gasmoleküle aus einer Flüssigkeit entfernt, spricht man von Entgasung.
**Löslichkeit**
   Die Löslichkeit bezeichnet die Eigenschaft einer bestimmten Flüssigkeit ein bestimmtes Gas zu lösen. Je höher die Löslichkeit desto mehr Gas kann in der Flüssigkeit gelöst werden. Die Löslichkeit ist abhängig von der Temperatur.
**Partialdruck**
   Der Partialdruck bezeichnet den Teildruck einer einzelnen Komponente in einem Gasgemisch. Die Summe aller Partialdrücke ist gleich dem Gesamtdruck. Der Partialdruck entspricht dem Druck, den die einzelne Gaskomponente bei alleinigem Vorhandensein im betreffenden Volumen ausüben würde.

## Patentansprüche

1. Vorrichtung (100) mit
einer Druckkammer (101) und einer mit der Druckkammer (101) in Fluidverbindung stehenden Mikropumpe (102),
wobei die Druckkammer (101) einen gasführenden Bereich (103) und einen flüssigkeitsführenden Bereich (104) aufweist,
wobei die Mikropumpe (102) ausgebildet ist, um innerhalb des gasführenden Bereichs (103) einen pneumatischen Druck zu erzeugen, der geringer ist als ein Fluiddruck einer durch den flüssigkeitsführenden Bereich (104) strömenden Flüssigkeit (105),
und wobei ein gasdurchlässiges und flüssigkeitsundurchlässiges Abscheideelement (106) zumindest abschnittsweise den gasführenden Bereich (103) und den flüssigkeitsführenden Bereich (104) voneinander trennt,
wobei die Mikropumpe (102) an der Druckkammer (101) angeordnet ist und der flüssigkeitsführende Bereich (104) eine innerhalb der Druckkammer (101) verlaufende Schlauchleitung (301) ist, wobei die Schlauchleitung (301) zumindest abschnittsweise ein Material aufweist, das das gasdurchlässige und flüssigkeitsundurchlässige Abscheideelement (106) bildet, oder
wobei das Abscheideelement (106) eine zwischen dem gasführenden Bereich (103) und dem flüssigkeitsführenden Bereich (104) angeordnete gasdurchlässige und flüssigkeitsundurchlässige Membran ist,
wobei die Vorrichtung (100) eine flüssigkeitsfördernde Pumpe (102, 202) aufweist, mittels derer Flüssigkeit (105) durch den flüssigkeitsführenden Bereich (104) gefördert werden kann, oder wobei die Mikropumpe (102) ausgebildet ist, um Flüssigkeit (105) durch den flüssigkeitsführenden Bereich (104) zu fördern, und
wobei die Vorrichtung (100) eine mit dem gasführenden Bereich (103) fluidisch gekoppelte Drucksensorik (302) und eine mit der Drucksensorik (302) und der flüssigkeitsfördernden Pumpe (202) verbundene Steuerung (303) aufweist, wobei die Steuerung (303) ausgebildet ist, um die flüssigkeitsfördernde Pumpe ( 202) in Abhängigkeit von einem Signal der Drucksensorik (302) derart anzusteuern, dass die Förderrate der flüssigkeitsfördernden Pumpe (202) soweit erhöht wird, bis der Druck innerhalb des gasführenden Bereichs (103) einen Schwellwert erreicht, und derart, dass bei einem einen Schwellwert überschreitenden Druck innerhalb des gasführenden Bereichs (103) die Förderrate der flüssigkeitsfördernden Pumpe ( 202) gesenkt wird.

2. Vorrichtung (100) nach Anspruch 1, wobei die Schlauchleitung (301) schraubenförmig in der Druckkammer (101) angeordnet ist.

3. Vorrichtung (100) nach einem der vorhergehenden Ansprüche, wobei die Mikropumpe (102) ausgebildet ist, um in dem gasführenden Bereich (103) der Druckkammer (101) einen Unterdruck von -30 kPa bis zu -55 kPa gegenüber dem Atmosphärendruck zu erzeugen.

4. Vorrichtung (100) nach einem der vorhergehenden Ansprüche, wobei die Mikropumpe (102) ein Hubvolumen pro Pumpenhub von 50 µl oder weniger aufweist.

5. Vorrichtung (100) nach einem der vorhergehenden Ansprüche, wobei die Mikropumpe (102) mittels einer Schraub- und/oder einer Klemmbefestigung an der Druckkammer (101) befestigt ist.

6. Vorrichtung (100) nach einem der vorhergehenden Ansprüche, wobei die Mikropumpe (102) mittels eines Fügemittels, insbesondere mittels Klebstoff oder Lot, an der Drucckammer (101) befestigt ist.

7. Vorrichtung (100) nach einem der vorhergehenden Ansprüche, wobei die Vorrichtung (100) ferner eine mit der Drucksensorik (302) verbundene Steuerung (303) aufweist, wobei die Steuerung (303) ausgebildet ist, um die Mikropumpe (102) in Abhängigkeit von einem Signal der Drucksensorik (303) derart anzusteuern, dass die Mikropumpe (102) eingeschaltet wird, wenn der Druck innerhalb des gasführenden Bereichs (103) der Druckkammer (101) über einen Schwellwert ansteigt.

8. Vorrichtung (100) nach einem der vorhergehenden Ansprüche, wobei die Vorrichtung (100) eine Temperaturregelvorrichtung (402) aufweist, die ausgebildet ist, um den gasführenden Bereich (103) zu kühlen und/oder den flüssigkeitsführenden Bereich (104) zu heizen.

9. Vorrichtung (100) nach einem der vorhergehenden Ansprüche, wobei die Vorrichtung (100) ein mit dem gasführenden Bereich (103) fluidisch gekoppeltes Ventil aufweist, das mit einer ein Strippungs-Gas führenden Leitung verbunden ist, um ein Strippungs-Gas in den gasführenden Bereich (103) der Druckkammer (101) einzuleiten.

10. Vorrichtung (100) nach einem der vorhergehenden Ansprüche, wobei innerhalb der Druckkammer (101) oder in Strömungsrichtung der Flüssigkeit (105) vor der Drucckammer (101) ein optisches oder kapazitives Gasblasendetektionsmittel vorgesehen ist, das ausgebildet ist, um eine Gasblase in der Flüssigkeit (105) zu detektieren, und wobei die Vorrichtung (100) ferner eine Steuerung (303) aufweist, die ausgebildet ist, um die Mikropumpe (102) in Abhängigkeit von einer erfolgten Gasblasendetektion einzuschalten.

11. Vorrichtung (100) nach einem der vorhergehenden Ansprüche, wobei der flüssigkeitsführende Bereich (104) der Druckkammer (101) einen Einlass (107) und einen Auslass (108) aufweist, mittels deren die Vorrichtung (100) in eine flüssigkeitsführende Leitung (401) eines flüssigkeitsführenden Systems (200) zwischenschaltbar ist.

12. Flüssigkeitsführendes System (200) mit einer Vorrichtung (100) gemäß einem der vorhergehenden Ansprüche.

## Claims

1. Apparatus (100), comprising
a pressure chamber (101) and a micropump (102) in fluid connection with the pressure chamber (101),
wherein the pressure chamber (101) comprises a gas-carrying region (103) and a liquid-carrying region (104),
wherein the micropump (102) is configured to generate a pneumatic pressure within the gas-carrying region (103) that is lower than a fluid pressure of liquid (105) flowing through the liquid-carrying region (104),
and wherein a gas-permeable and liquid-impermeable separating element (106) separates the gas-carrying region (103) and the liquid-carrying region (104) from each other at least in sections,
wherein the micropump (102) is disposed on the pressure chamber (101) and the liquid-carrying region (104) is a tube conduit (301) running within the pressure chamber (101), wherein the tube conduit (301) comprises, at least in sections, a material forming the gas-permeable and liquid-impermeable separating element (106), or
wherein the separating element (106) is a gas-permeable and liquid-impermeable membrane disposed between the gas-carrying region (103) and the liquid-carrying region (104),
wherein the apparatus (100) comprises a liquid-delivering pump (102, 202) by means of which liquid (105) can be delivered through the liquid-carrying region (104) or wherein the micropump (102) is configured to deliver liquid (105) through the liquid-carrying region (104), and
wherein the apparatus (100) comprises a pressure sensor (302) fluidically coupled to the gas-carrying region (103) and a control (303) connected to the pressure sensor (302) and the liquid-delivering pump (202), wherein the control (303) is configured to control the liquid-delivering pump (202) in dependence on a signal of the pressure sensor (302) such that the delivery rate of the liquid-delivering pump (202) is increased until the pressure within the gas-carrying region (103) reaches a threshold and such that the delivery rate of the liquid-delivering pump (202) is lowered at a pressure exceeding a threshold within the gas-carrying region (103).

2. Apparatus (100) according to claim 1, wherein the tube conduit (301) is disposed in the pressure chamber (101) in a spiral shape.

3. Apparatus (100) according to one of the preceding claims, wherein the micropump (102) is configured to generate a negative pressure of -30kPa to -55kPa with respect to atmospheric pressure in the gas-carrying region (103) of the pressure chamber (101).

4. Apparatus (100) according to one of the preceding claims, wherein the micropump (102) comprises a stroke volume per pump stroke of 50 µl or less.

5. Apparatus (100) according to one of the preceding claims, wherein the micropump (102) is mounted on the pressure chamber (101) by means of screw and/or clamp fixing.

6. Apparatus (100) according to one of the preceding claims, wherein the micropump (102) is mounted on the pressure chamber (101) by means of joining means, in particular by means of adhesive or solder.

7. Apparatus (100) according to one of the preceding claims, wherein the apparatus (100) further comprises a control (303) connected to the pressure sensor (302), wherein the control (303) is configured to control the micropump (102) in dependence on a signal of the pressure sensor (303) such that the micropump (102) is switched on when the pressure within the gas-carrying region (103) of the pressure chamber (101) rises above a threshold.

8. Apparatus (100) according to one of the preceding claims, wherein the apparatus (100) comprises a temperature regulation apparatus (402) that is configured to cool the gas-carrying region (103) and/or to heat the liquid-carrying region (104).

9. Apparatus (100) according to one of the preceding claims, wherein the apparatus (100) comprises a valve fluidically coupled to the gas-carrying region (103) connected to a strip gas-carrying conduit in order to introduce a strip gas into the gas-carrying region (103) of the pressure chamber (101).

10. Apparatus (100) according to one of the preceding claims, wherein optical or capacitive gas bubble detection means are provided within the pressure chamber (101) or in flow direction of the liquid (105) in front of the pressure chamber (101), which are configured to detect a gas bubble in the liquid (105) and wherein the apparatus (100) further comprises a control (303) that is configured to switch on the micropump (102) in dependence on a detected gas bubble.

11. Apparatus (100) according to one of the preceding claims, wherein the liquid-carrying region (104) of the pressure chamber (101) comprises an inlet (107) and an outlet (108) by means of which the apparatus (100) can be interposed in a liquid-carrying conduit (401) of a liquid-carrying system (200).

12. Liquid-carrying system (200) comprising an apparatus (100) according to one of the preceding claims.

## Revendications

1. Dispositif (100) avec
une chambre de pression (101) et une micro-pompe (102) en communication de fluide avec la chambre de pression (101),
dans lequel la chambre de pression (101) présente une zone d'acheminement de gaz (103) et une zone d'acheminement de liquide (104),
dans lequel la micro-pompe (102) est conçue pour générer, dans la zone d'acheminement de gaz (103), une pression pneumatique qui est inférieure à une pression de fluide d'un liquide (105) circulant à travers la zone d'acheminement de liquide (104),
et dans lequel un élément de séparation perméable aux gaz et imperméable aux liquides (106) sépare l'une de l'autre, au moins par segments, la zone d'acheminement de gaz (103) et la zone d'acheminement de liquide (104),
dans lequel la micro-pompe (102) est disposée sur la chambre de pression (101) et la zone d'acheminement de liquide (104) est un tube flexible (301) s'étendant à l'intérieur de la chambre de pression (101), dans lequel le tube flexible (301) présente, au moins par segments, un matériau qui forme l'élément de séparation perméable aux gaz et imperméable aux liquides (106), ou
dans lequel l'élément de séparation (106) est une membrane perméable aux gaz et imperméable aux liquides disposée entre la zone d'acheminement de gaz (103) et la zone d'acheminement de liquide (104),
dans lequel le dispositif (100) présente une pompe d'acheminement de liquide (102, 202) au moyen de laquelle le liquide (105) peut être acheminé à travers la zone d'acheminement de liquide (104), ou dans lequel la micro-pompe (102) est conçue pour acheminer du liquide (105) à travers la zone d'acheminement de liquide (104), et
dans lequel le dispositif (100) présente un système de capteurs de pression (302) couplé en fluide à la zone d'acheminement de gaz (103) et un moyen de commande (303) connecté au système de capteurs de pression (302) et à la pompe d'acheminement de liquide (202), dans lequel le moyen de commande (303) est conçu pour commander la pompe d'acheminement de liquide (202) en fonction d'un signal du système de capteurs de pression (302) de sorte que le débit de la pompe d'acheminement de liquide (202) soit augmenté jusqu'à ce que la pression à l'intérieur de la zone d'acheminement de gaz (103) atteigne une valeur de seuil, et de sorte que, en cas de pression excédant une valeur de seuil à l'intérieur de la zone d'acheminement de gaz (103), le débit de la pompe d'acheminement de liquide (202) soit réduit.

2. Dispositif (100) selon la revendication 1, dans lequel le tube flexible (301) est disposé en hélice dans la chambre de pression (101).

3. Dispositif (100) selon l'une des revendications précédentes, dans lequel la micro-pompe (102) est conçue pour générer, dans la zone d'acheminement de gaz (103) de la chambre de pression (101), une pression négative de -30 kPa à -55 kPa par rapport à la pression atmosphérique.

4. Dispositif (100) selon l'une des revendications précédentes, dans lequel la micro-pompe (102) présente un volume de déplacement par course de pompe de 50 µl ou moins.

5. Dispositif (100) selon l'une des revendications précédentes, dans lequel la micro-pompe (102) est fixée à la chambre de pression (101) au moyen d'une vis et/ou d'une fixation par serrage.

6. Dispositif (100) selon l'une des revendications précédentes, dans lequel la micro-pompe (102) est fixée à la chambre de pression (101) à l'aide d'un moyen d'assemblage, en particulier à l'aide d'un adhésif ou de brasure.

7. Dispositif (100) selon l'une des revendications précédentes, dans lequel le dispositif (100) présente par ailleurs un moyen de commande (303) connecté à un système de capteur de pression (302), dans lequel le moyen de commande (303) est conçu pour commander la micro-pompe (102) en fonction d'un signal du système de capteur de pression (303) de sorte que la micro-pompe (102) soit mise en marche lorsque la pression dans la zone d'acheminement de gaz (103) de la chambre de pression (101) monte au-dessus d'une valeur de seuil.

8. Dispositif (100) selon l'une des revendications précédentes, dans lequel le dispositif (100) présente un dispositif de régulation de température (402) qui est conçu pour refroidir la zone d'acheminement de gaz (103) et/ou pour chauffer la zone d'acheminement de liquide (104).

9. Dispositif (100) selon l'une des revendications précédentes, dans lequel le dispositif (100) présente une soupape couplée en fluide à la zone d'acheminement de gaz (103) qui est connectée à un conduit d'acheminement de gaz d'épuration pour introduire un gaz d'épuration dans la zone d'acheminement de gaz (103) de la chambre de pression (101).

10. Dispositif (100) selon l'une des revendications précédentes, dans lequel est prévu, dans la chambre de pression (101) ou, dans la direction de circulation du liquide (105), avant la chambre de pression (101), un moyen de détection de bulles de gaz optique ou capacitif qui est conçu pour détecter une bulle de gaz dans le liquide (105), et dans lequel le dispositif (100) présente par ailleurs un moyen de commande (303) qui est conçu pour mettre en marche la micro-pompe (102) en fonction d'une détection de bulle de gaz qui a eu lieu.

11. Dispositif (100) selon l'une des revendications précédentes, dans lequel la zone d'acheminement de liquide (104) de la chambre de pression (101) présente une entrée (107) et une sortie (108) au moyen desquelles le dispositif (100) peut être interposé dans un conduit d'acheminement de liquide (401) d'un système d'acheminement de liquide (200).

12. Système d'acheminement de liquide (200) avec un dispositif (100) selon l'une des revendications précédentes.
